(19) Europäisches Patentamt / European Patent Office / Office européen des brevets

(11) **EP 4 397 712 A1**

(12) **EUROPEAN PATENT APPLICATION**
published in accordance with Art. 153(4) EPC

(43) Date of publication:
**10.07.2024 Bulletin 2024/28**

(21) Application number: **22865049.5**

(22) Date of filing: **31.08.2022**

(51) International Patent Classification (IPC):
**C08L 67/04** (2006.01)          **C08L 23/12** (2006.01)
**C08J 9/00** (2006.01)

(52) Cooperative Patent Classification (CPC):
**C08J 9/00; C08J 9/12; C08L 23/12; C08L 67/02;
C08L 67/04;** Y02W 90/10

(86) International application number:
**PCT/KR2022/013050**

(87) International publication number:
**WO 2023/033547 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 KR 20210115994**

(71) Applicant: **CJ CheilJedang Corporation**
**Seoul 04560 (KR)**

(72) Inventors:
• **JANG, Yunjae**
  **Seoul 04560 (KR)**

• **LEE, Eun-Hye**
  **Seoul 04560 (KR)**
• **PARK, Jeung Yil**
  **Seoul 04560 (KR)**
• **YOON, Ki Chull**
  **Seoul 04560 (KR)**
• **SHIN, Soo An**
  **Seoul 04560 (KR)**
• **ZHANG, Tao**
  **Yongin-si, Gyeonggi-do 16890 (KR)**
• **KANG, Ho Jong**
  **Yongin-si, Gyeonggi-do 16890 (KR)**

(74) Representative: **Dehns**
**St. Bride's House**
**10 Salisbury Square**
**London EC4Y 8JD (GB)**

(54) **FOAMING COMPOSITION, BIO-DEGRADABLE FOAM, AND PREPARATION METHOD THEREFOR**

(57)    The bio-degradable foam prepared from a composition comprising a polyhydroxyalkanoate (PHA) resin of which crystallinity is controlled can be biodegraded even in the ocean while having excellent physical properties, thermal property and processability, and can be effectively prepared by means of supercritical carbon dioxide foaming and the like.

[Fig. 1]

## Description

### Technical Field

The present invention relates to a foaming composition, to a biodegradable foam, and to a process for preparing the same.

### Background Art

Foams are widely used as a cushioning material in the storage or distribution process of various products, including home appliances, and refrigerated/frozen fresh foods. However, plastic foams such as polystyrene or polyvinyl chloride, which have been mainly used in the past, are hardly biodegradable by microorganisms when landfilled, and hazardous substances are emitted when incinerated, thereby causing environmental problems. Thus, some plastic foams are recycled through separate collection when discarded; however, if part of a cushioning material breaks during the handling process, it flows into rivers and the ocean due to the lightweight nature of the foam, causing various environmental problems.

In addition, cushioning materials used in individual packaging of food such as fruit to prevent deterioration in the marketability due to impacts during the distribution process thereof, or small-sized cushioning materials made in a bead shape to be applied to various forms are to be incinerated since their recovery and sorting for recycling is difficult. Nevertheless, they may cause a problem of river and ocean pollution when they leak.

In particular, as consumer purchasing patterns have rapidly changed to those using courier services in recent years, it is expected that more foams will be consumed. Thus, there is an urgent need to introduce biodegradable materials that can solve the problem of ocean pollution from foams that cannot be managed through the recovery and recycling systems. To this end, research has been actively conducted to introduce biodegradable materials such as aliphatic polyester, starch-based polymer, cellulose acetate, polylactic acid, polycaprolactone, and polybutylene succinate into foamed cushioning materials.

For example, foams containing a polylactic acid resin as a representative biodegradable material are known. However, there are problems in that a polylactic acid resin may be easily broken due to its lack of moldability, mechanical strength, and thermal resistance and that it has low resistance to temperature, causing deformation in its shape when the external temperature rises to 60°C or higher. In addition, most biodegradable materials have low biodegradability in the ocean. Thus, the development of biodegradable foams that can resolve these problems is urgently needed.

[Prior Art Document]

(Patent Document 1) Korean Patent No. 2056838

### Disclosure of Invention

### Technical Problem

As a result of research conducted by the present inventors, when a polyhydroxyalkanoate (PHA) resin as a biodegradable polymer, whose crystallinity has been adjusted, is used, it is possible to achieve foams that have excellent mechanical, thermal, and processing properties and are biodegradable in the ocean.

Accordingly, an object of the present invention is to provide a foaming composition that is biodegradable and has excellent mechanical, thermal, and processing properties, a biodegradable foam, and a process for preparing the same.

### Solution to Problem

The present invention provides a foaming composition that comprises a biodegradable resin, wherein the biodegradable resin comprises a polyhydroxyalkanoate (PHA) resin, and the polyhydroxyalkanoate (PHA) resin comprises a 4-hydroxybutyrate (4-HB) repeat unit.

In addition, the present invention provides a biodegradable form that comprises the foaming composition.

In addition, the present invention provides a process for preparing a biodegradable foam that comprises preparing a foaming composition comprising a biodegradable resin; and adding a foaming agent to the foaming composition and performing foaming, wherein the biodegradable resin comprises a polyhydroxyalkanoate (PHA) resin, and the polyhydroxyalkanoate (PHA) resin comprises a 4-hydroxybutyrate (4-HB) repeat unit.

**Advantageous Effects of Invention**

The foaming composition according to the present invention comprises a biodegradable polymer comprising a polyhydroxyalkanoate (PHA) resin, whose crystallinity has been adjusted, a foam prepared therefrom has excellent mechanical, thermal, and processing properties and is biodegradable in the ocean.

In addition, the foaming composition according to the present invention can be further improved in its physical properties by adjusting the copolymerization monomer composition of the PHA resin or blending it with a polylactic acid (PLA) resin or a polypropylene (PP) resin. It can be effectively prepared into a biodegradable foam by methods such as supercritical carbon dioxide foaming.

**Brief Description of Drawings**

Fig. 1 shows images of the shape of cells in the biodegradable foam according to the Example as observed using a scanning electron microscope (SEM).

Fig. 2 shows an example of a supercritical foaming process using carbon dioxide.

Fig. 3 shows SEM images of foams prepared from PHA copolymer resins with various 4-HB contents with respect to temperature (foaming pressure of 90 bar).

Fig. 4 shows dynamic mechanical thermal analysis (DMA) thermograms of various PHA copolymer resins with or without the addition of a chain extender (ADR).

Figs. 5a and 5b each show the resilience characteristics of PHA copolymer resin foams with a 4-HB content of 10% by weight or 30% by weight.

Figs. 6a and 6b each show the foam density and expansion ratio of PHA copolymer resin foam beads with respect to foaming temperature (foaming pressure of 90 bar).

Fig. 7 shows SEM images of PHA copolymer resin foams obtained under various foaming pressure conditions (foaming temperature of 130°C for PHA10, 100°C for PHA16, and 50°C for PHA30).

Figs. 8a, 8b, and 8c each show the expansion ratio, cell diameter, and cell density of PHA copolymer resin foams with respect to foaming pressure.

Fig. 9 shows SEM images of PHA copolymer resin foams with or without the addition of a chain extender (ADR).

Figs. 10a and 10b each show the density and expansion ratio of PHA copolymer resin foams with or without the addition of a chain extender.

<Explanation of Reference Numerals>

10: foaming composition, 20: biodegradable foam, 30: temperature controller, 40: pressure gauge, 50: pressure controller, 60: carbon dioxide tank

**Mode for the Invention**

Hereinafter, various embodiments and examples of the present invention will be described in detail by referring to the drawings.

In this specification, terms referring to the respective components are used to distinguish them from each other and are not intended to limit the scope of the present invention. In addition, in the present specification, a singular expression is interpreted to cover a plural number as well unless otherwise specified in the context.

In the present specification, the term "comprising" is intended to specify a particular characteristic, region, step, process, element, and/or component. It does not exclude the presence or addition of any other characteristic, region, step, process, element and/or component, unless specifically stated to the contrary.

In the present specification, the terms first, second, and the like are used to describe various components. But the components should not be limited by the terms. The terms are used for the purpose of distinguishing one element from another.

**Foaming composition**

The foaming composition according to an embodiment of the present invention comprises a biodegradable resin, wherein the biodegradable resin comprises a polyhydroxyalkanoate (PHA) resin, and the polyhydroxyalkanoate (PHA) resin comprises a 4-hydroxybutyrate (4-HB) repeat unit.

The foaming composition according to an embodiment comprises a polyhydroxyalkanoate (PHA) resin as a biodegradable resin. For example, it may comprise 10% by weight or more, 20% by weight or more, 30% by weight or more, 50% by weight or more, 70% by weight or more, 80% by weight or more, 85% by weight or more, 90% by weight or more, or 95% by weight or more of a PHA resin as a biodegradable resin. As a specific example, the foaming composition may comprise 100% by weight of a polyhydroxyalkanoate (PHA) resin as a biodegradable resin.

The polyhydroxyalkanoate (PHA) resin has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits complete biodegradability, and is excellent in biocompatibility.

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, the PHA resin is biodegradable in soil and sea. Thus, when the biodegradable resin comprises the PHA resin, it is biodegradable under any environmental conditions, such as soil and sea, and has environmentally friendly characteristics. Thus, an article formed using the biodegradable resin comprising the PHA resin can be used in various fields as an environmentally friendly article.

The PHA resin may be formed by an enzyme-catalyzed polymerization of one or more monomer repeat units in living cells.

The PHA resin may be a polyhydroxyalkanoate (PHA) copolymer resin, specifically, a copolymer comprising two or more different repeat units with the different repeat units randomly distributed in the polymer chain.

Examples of repeat units that may be contained in the PHA resin include 2-hydroxybutyrate, lactic acid, glycolic acid, 3-hydroxybutyrate (3-HB), 3-hydroxypropionate (3-HP), 3-hydroxyvalerate (3-HV), 3-hydroxyhexanoate (3-HH), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

According to an embodiment of the present invention, the PHA resin comprises a 4-HB repeat unit. That is, the PHA resin may be a PHA copolymer comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer that comprises a 4-HB repeat unit and further comprises one repeat unit different from the 4-HB repeat unit, or further comprises two, three, four, five, six, or more repeat units different from each other.

According to an embodiment of the present invention, the PHA resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit.

Specifically, the PHA resin may comprise a PHA copolymer resin that comprises one or more repeat units selected from the group consisting of 3-HB, 3-HP, 3-HH, 3-HV, 4-HV, 5-HV, and 6-HH, and a 4-HB repeat unit.

More specifically, the PHA resin may be a PHA copolymer resin comprising a 3-HB repeat unit and a 4-HB repeat unit.

For example, the PHA resin may be poly-3-hydroxybutyrate-co-4-hydroxybutyrate (P3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and sea and to achieve excellent physical properties such as enhanced optical properties, thermal properties, and mechanical properties, the content of the 4-HB repeat unit in the PHA copolymer may be important.

More specifically, the PHA copolymer resin may comprise a 4-HB repeat unit in an amount of 0.1% by weight to 60% by weight based on the total weight of the PHA copolymer resin. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin.

For example, the PHA copolymer resin may comprise a 4-HB repeat unit in an amount of 0.1% by weight or more, 5% by weight or more, 10% by weight or more, 12% by weight or more, 13% by weight or more, 15% by weight or more, 17% by weight or more, 18% by weight or more, 20% by weight or more, or 25% by weight or more, and 60% by weight or less, 55% by weight or less, 50% by weight or less, 45% by weight or less, 43% by weight or less, 42% by weight or less, 40% by weight or less, or 35% by weight or less, based on the total weight of the PHA copolymer resin, but it is not limited thereto.

As a specific example, the PHA resin may be a PHA copolymer resin comprising a 4-HB repeat unit in an amount of 0.1 to 60% by weight.

If the content of the 4-HB repeat unit satisfies the above range, the biodegradability in soil and sea may be increased, excellent optical properties may be maintained, the thermal properties of a material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1% by weight to 60% by weight based on the total weight of the PHA resin. Specific characteristics of the first PHA resin and the second PHA resin are described below.

Meanwhile, the PHA copolymer resin may comprise a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer resin.

Meanwhile, the PHA resin may have a glass transition temperature (Tg) of, for example, -45°C to 80°C, -35°C to 80°C, -30°C to 80°C, -25°C to 75°C, -20°C to 70°C, - 35°C to 5°C, -25°C to 5°C, -35°C to 0°C, -25°C to 0°C, -30°C to -10°C, -35°C to -15°C, - 35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100°C to 170°C, for example, 110°C to 150°C, or, for example, 120°C to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 100,000 g/mole to 900,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 400,000 g/mole to 800,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA resin may comprise a first PHA resin, a second PHA resin, or a mixed resin of the first PHA resin and the second PHA resin.

The first PHA resin and the second PHA resin may be distinguished in terms of the content of a 4-HB repeat unit, glass transition temperature (Tg), crystallization temperature (Tc), and melting temperature (Tm).

Specifically, the first PHA may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be, for example, -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second PHA resin may comprise a 4-HB repeat unit in an amount of 0.1% by weight to 30% by weight. For example, the second PHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70°C to 120°C, for example, 75°C to 115°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the content of a 4-HB repeat unit, glass transition temperature (Tg), crystallization temperature (Tc), and melting temperature (Tm) in the above ranges, it may be more advantageous for achieving the effect desired in the present invention.

In addition, the first PHA resin and the second PHA resin may each be a PHA resin whose crystallinity is adjusted.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, - 35°C to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

Meanwhile, in order to accomplish the effect according to an embodiment of the present invention, the content of the PHA resin contained in the biodegradable resin is important.

The biodegradable resin may comprise the PHA resin in an amount of 40 to 99% by weight based on the total weight of the biodegradable resin. For example, it may be contained in an amount of 0% by weight to 95% by weight, 40% by weight to 80% by weight, 40% by weight or more, 50% by weight or more, 55% by weight or more, 60% by weight or more, 65% by weight or more, or 70% by weight or more, and 99% by weight or less, 95% by weight or less, 90% by weight or less, 85% by weight or less, or 80% by weight or less.

Meanwhile, when the PHA resin comprises the first PHA resin, it may be employed in an amount of, for example, 1% to 95% by weight. If the first PHA resin is used alone, the first PHA resin may be employed in an amount of, for example, 5 to 80% by weight based on the total weight of the biodegradable resin. Specifically, the first PHA resin may be employed in an amount of 10% by weight or more and 40% by weight or less.

As another example, if the first PHA resin is mixed with the second PHA resin to be used, the first PHA resin is employed in an amount of, for example, 1 to 50% by weight, for example, 10 to 40% by weight, or, for example, 20 to 40% by weight.

When the PHA resin comprises the second PHA resin, it may be employed in an amount of, for example, 1% to 95% by weight. If the second PHA resin is used alone, the second PHA resin may be employed in an amount of, for example, 50 to 95% by weight based on the total weight of the biodegradable resin. Specifically, the second PHA resin may be employed in an amount of 50% by weight or more, 55% by weight or more, 60% by weight or more, 65% by weight or more, or 70% by weight or more, and 95% by weight or less, 90% by weight or less, 85% by weight or less, or 80% by weight or less.

As another example, if the second PHA resin is mixed with the first PHA resin to be used, the second PHA resin may be employed in an amount of, for example, 20 to 80% by weight, or, for example, 30 to 70% by weight.

According to another embodiment of the present invention, when the PHA resin comprises a mixed resin of the first PHA resin and the second PHA resin, the weight ratio of the first PHA resin to the second PHA resin may be, for example, 1:0.05 to 5, for example, 1:0.5 to 4, or, for example, 1: 1.2 to 4.

If the content of the PHA resin, or the content of each of the first PHA resin and the second PHA resin, and their content ratio each satisfy the above ranges, optical properties, thermal properties, and mechanical properties can be further enhanced, and moldability, processability, and productivity can also be enhanced when a biodegradable article is produced.

As described above, two types of PHA resins with different crystallinities, for example, a crystalline PHA resin and a semi-crystalline or amorphous PHA resin may be mixed to adjust the content of a 4-HB repeat unit. As a result, it is possible to control the thermal properties, crystallization behavior, and melt viscosity of the PHA resin. Specifically, a crystalline PHA resin has the disadvantage of being brittle, and an amorphous PHA resin has low melt strength to have poor foaming characteristics. As they are appropriately mixed to adjust the crystallinity of a PHA resin, the respective disadvantages can be improved.

The foaming composition according to an embodiment may comprise a polyhydroxyalkanoate (PHA) resin as a biodegradable resin in an amount of, for example, 10% by weight or more, 20% by weight or more, 30% by weight or more, 50% by weight or more, 70% by weight or more, 80% by weight or more, 85% by weight or more, 90% by weight or more, or 95% by weight or more. As a specific example, the foaming composition may comprise 100% by weight of a polyhydroxyalkanoate (PHA) resin as a biodegradable resin.

The biodegradable resin may further comprise conventional biodegradable materials widely used in addition to the polyhydroxyalkanoate (PHA) resin. For example, the biodegradable resin may further comprise at least one resin selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin. In addition, the biodegradable resin may further comprise other resins, such as a polypropylene (PP) resin.

Specifically, the biodegradable resin may further comprise at least one of a polylactic acid (PLA) resin and a polypropylene (PP) resin.

According to a specific example, the biodegradable resin may comprise the polyhydroxyalkanoate (PHA) resin and the polylactic acid (PLA) resin. A polylactic acid (PLA) resin has the disadvantage of being easily brittle due to its high crystallinity. If it is appropriately mixed with a PHA resin with controlled crystallinity, this disadvantage of a PLA resin can be minimized.

The weight ratio of a PHA resin and a PLA resin (PHA :PLA) in the biodegradable resin may be in the range of 5:95 to 90:10, 5:95 to 70:30, 5:95 to 50:50, 5:95 to 40:60, 5:95 to 35:65, 10:90 to 30:70, 10:90 to 25:75, 10:90 to 20:80, 15:85 to 30:70, 20:80 to 30:70, or 15:85 to 25:75. More specifically, the biodegradable resin may comprise the polyhydroxyalkanoate (PHA) resin and the polylactic acid (PLA) resin in a weight ratio of 10:90 to 30:70. Within the above preferred weight ratio range, the foaming characteristics of the biodegradable resin can be further enhanced.

According to another specific example, the biodegradable resin may comprise the polyhydroxyalkanoate (PHA) resin and the polypropylene (PP) resin. When the polypropylene (PP) resin is used alone, the expansion ratio may not be high; however, when it is appropriately mixed with a PHA resin with controlled crystallinity, the expansion ratio can be enhanced.

The PP resin mixed with the PHA resin may be a homopolymer resin or a copolymer resin. As an example, the PP resin may be a copolymerized PP resin comprising an ethylene comonomer. The copolymerized PP resin may be an alternating copolymerized PP resin, a block copolymerized PP resin, or a random copolymerized PP resin. Specifically, a random copolymerized PP resin has a similar melting temperature to that of a PHA resin; thus, it can enhance the foaming characteristics of a blended resin.

More specifically, when the PP resin is a random copolymerized PP resin and the PHA resin is a crystalline PHA resin, for example, a PHA copolymer resin having 1 to 24% by weight of a 4-HB repeat unit, the foaming characteristics of a blended resin may be further enhanced.

The weight ratio of a PHA resin and a PP resin (PHA:PP) in the biodegradable resin may be in the range of 5:95 to 90:10, 5:95 to 70:30, 5:95 to 50:50, 5:95 to 40:60, 5:95 to 35:65, 10:90 to 30:70, 10:90 to 25:75, 10:90 to 20:80, 15:85 to 30:70, 20:80 to 30:70, or 15:85 to 25:75. More specifically, the biodegradable resin may comprise the polyhydroxyalkanoate (PHA) resin and the polypropylene (PP) resin in a weight ratio of 10:90 to 30:70.

The foaming composition may further comprise at least one additive. For example, the additive may be employed in an amount of 0.5 to 30% by weight based on the total weight of the foaming composition. As an example, the foaming composition may comprise at least one additive among chain extenders and crosslinking agents. The chain extender may be, for example, an epoxy-based chain extender. Specifically, it may be a multifunctional epoxy acrylate-based oligomer, but it is not limited thereto. In addition, examples of commercially available epoxy-based chain extenders include, but are not limited to, Joncryl™ ADR series, such as ADR-4370 and ADR-4400. The chain extender may be employed in an amount of 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total weight of the foaming composition. In addition, the foaming composition may comprise additives such as antioxidants, nucleating agents, stabilizers, and compatibilizers.

The foaming composition according to an embodiment of the present invention may have characteristics advantageous for foaming.

As an example, the foaming composition may have a tan δ of 0.1 or more, 0.5 or more, 1 or more, 1.5 or more, 2 or more, 2.5 or more, 3 or more, or 5 or more, and 40 or less, 36 or less, 30 or less, 20 or less, 15 or less, 13 or less, 12 or less, 10 or less, 9 or less, 8 or less, 7 or less, or 6 or less, when calculated by the following equation at a temperature of 180°C and a frequency of 0.1 rad/s.

$$\tan \delta = (E'' \, / \, E')$$

Here, E" is the loss modulus, and E' is the storage modulus.

Specifically, the foaming composition may have a tan δ of 2 to 40, more specifically, 2.5 to 13, 2.5 to 12, or 2.5 to 9, when calculated by the above equation at a temperature of 180°C and a frequency of 0.1 rad/s. Within the above preferred range, the foaming composition is excellent in viscoelasticity and enhanced in melt strength, whereby its foaming characteristics can be enhanced.

As another example, the foaming composition may have a tan δ of 1.0 or less, 0.8 or less, 0.6 or less, 0.5 or less, 0.4 or less, 0.3 or less, 0.2 or less, or 0.1 or less, and greater than 0, 0.01 or more, 0.05 or more, 0.1 or more, 0.2 or more, 0.3 or more, 0.4 or more, or 0.5 or more, when calculated by the above equation at a temperature of 60°C and a frequency of 0.1 MHz.

In addition, the foaming composition may have a tan δ of 0.01 or more, 0.1 or more, 0.3 or more, 0.5 or more, 0.75 or more, 1 or more, or 1.2 or more, and 20 or less, 10 or less, 7 or less, 5 or less, 3 or less, 2 or less, or 1.5 or less, when calculated by the above equation at a temperature of 140°C and a frequency of 0.1 rad/s. Specifically, the foaming composition may have a tan δ of 0.01 to 10 or 0.1 to 3, when calculated by the above equation at a temperature of 140°C and a frequency of 0. 1 rad/s.

The foaming composition may have a complex viscosity of 1,000 Pa s or more, 5,000 Pa s or more, 10,000 Pa s or more, 20,000 Pa s or more, or 25,000 Pa s or more, and 170,000 Pa·s or less, 150,000 Pa·s or less, 125,000 Pa·s or less, 100,000 Pa·s or less, 75,000 Pa s or less, 50,000 Pa s or less, 30,000 Pa·s or less, or 15,000 Pa s or less, when measured at a temperature of 180°C and a frequency of 0.1 rad/s. Specifically, the foaming composition may have a complex viscosity of 1,000 Pa s to 15,000 Pa s or 25,000 Pa s to 170,000 Pa·s, when measured at a temperature of 180°C and a frequency of 0.1 rad/s.

In addition, the foaming composition may have a complex viscosity of 10,000 Pa·s or more, 30,000 Pa·s or more, 50,000 Pa·s or more, 100,000 Pa·s or more, or 200,000 Pa·s or more, and 1,000,000 Pa s or less, 750,000 Pa s or less, 500,000 Pa s or less, or 300,000 Pa s or less, when measured at a temperature of 140°C and a frequency of 0.1 rad/s. Specifically, the foaming composition may have a complex viscosity of 10,000 Pa·s to 1,000,000 Pa s or 100,000 Pa s to 750,000 Pa s, when measured at a temperature of 140°C and a frequency of 0.1 rad/s.

In addition, the foaming composition may have a glass transition temperature (Tg) of -30°C or higher, -25°C or higher, -22°C or higher, -15°C or higher, or -10°C or higher, and 10°C or lower, 5°C or lower, 3°C or lower, 2°C or lower, 1°C or lower, 0°C or lower, or -5°C or lower. In addition, the foaming composition may have a crystallization temperature (Tc) of 40°C or higher, 50°C or higher, 55°C or higher, 59°C or higher, 65°C or higher, or 70°C or higher, and 120°C or lower, 110°C or lower, 99°C or lower, 95°C or lower, or 90°C or lower. As a specific example, the foaming composition may have a glass transition temperature (Tg) of -25°C to 5°C and a crystallization temperature (Tc) of 55°C to 100°C. More specifically, the foaming composition may have a glass transition temperature (Tg) of -22°C to 2°C and a crystallization temperature (Tc) of 59°C to 99°C. As the glass transition temperature (Tg) and crystallization temperature (Tc) are adjusted as described above, excessively high temperatures are not required in the processing, thereby increasing economic efficiency.

For example, the foaming composition may have a tensile strength of 3 MPa or more, 5 MPa or more, 10 MPa or more, or 15 MPa or more, and 50 MPa or less, 40 MPa or less, 30 MPa or less, 25 MPa or less, or 20 MPa or less. As a specific example, the foaming composition may have a tensile strength of 5 MPa to 50 MPa. As a more specific example, the foaming composition may have a tensile strength of 5 MPa to 30 MPa. As the tensile strength of the foaming composition is adjusted, a foam having an appropriate tensile strength according to the intended use can be prepared.

The foaming composition may have an elongation at break of 5% or more, 10% or more, 20% or more, or 30% or more, and 1,200% or less, 1,000% or less, 500% or less, 300% or less, 200% or less, 100% or less, or 50% or less. As an example, the foaming composition may have an elongation at break of 5% to 1,200%, more specifically, 10% to 300%.

**Biodegradable foam and process for preparing the same**

In addition, the present invention provides a biodegradable form that comprises the foaming composition described above. That is, the present invention provides a biodegradable form prepared from the foaming composition described above.

The biodegradable foam according to the present invention is prepared from a biodegradable resin composition that comprises a polyhydroxyalkanoate (PHA) resin, whose crystallinity has been adjusted, whereby it has excellent mechanical, thermal, and processing properties and is biodegradable in the ocean.

In addition, the biodegradable foam according to the present invention can be further improved in its physical properties by adjusting the copolymerization monomer composition of the PHA resin or blending it with a polylactic acid (PLA) resin or a polypropylene (PP) resin. It can be effectively prepared by methods such as supercritical carbon dioxide foaming.

The biodegradable foam may have a density of 0.01 g/cm$^3$ or more, 0.05 g/cm$^3$ or more, 0.1 g/cm$^3$ or more, 0.15 g/cm$^3$ or more, 0.17 g/cm$^3$ or more, or 0.2 g/cm$^3$ or more, and 1.0 g/cm$^3$ or less, 0.8 g/cm$^3$ or less, 0.5 g/cm$^3$ or less, 0.4 g/cm$^3$ or less, 0.3 g/cm$^3$ or less, 0.25 g/cm$^3$ or less, or 0.23 g/cm$^3$ or less. As a specific example, the biodegradable foam may have a density of 0.01 g/cm$^3$ to 1.0 g/cm$^3$. More specifically, the biodegradable foam may have a density of 0.1 g/cm$^3$ to 0.80 g/cm$^3$ or 0.17 g/cm$^3$ to 0.25 g/cm$^3$. The range of density may be appropriately adapted depending on the intended use of a product to which the biodegradable foam is applied. For example, the density may be adjusted to be low to provide a lightweight foam.

The average diameter of cells contained in the biodegradable foam may be 1 μm or more, 3 μm or more, 5 μm or more, 10 μm or more, 20 μm or more, 30 μm or more, 35 μm or more, 40 μm or more, or 50 μm or more, and 250 μm or less, 230 μm or less, 220 μm or less, 190 μm or less, 120 μm or less, 100 μm or less, 90 μm or less, 80 μm or less, 70 μm or less, or 60 μm or less. As a specific example, the average diameter of cells contained in the biodegradable foam may be 3 μm to 250 μm. More specifically, the average diameter of cells contained in the biodegradable foam may be 3 μm to 80 μm or 35 μm to 80 μm. The average diameter of cells contained in the biodegradable foam may be adjusted in association with the density of the foam. It is desirable to form the cells contained in the foam to have a uniform diameter distribution.

The biodegradable foam may have a cell density ($N_f$) of $10^6$ cells/cm$^3$ to $10^{11}$ cells/cm$^3$ as calculated by the following equation.

$$N_f = \left(\frac{n}{A}\right)^{\frac{3}{2}} X \, \Phi$$

Here, A is the area (cm$^2$) measured by the number of cells in the biodegradable foam, n is the number of cells measured in the area, and Φ is the expansion ratio of the biodegradable foam.

For example, the cell density ($N_f$) may be $10^6$ cells/cm$^3$ or more, $10^7$ cells/cm$^3$ or more, $10^8$ cells/cm$^3$ or more, and $10^{11}$ cells/cm$^3$ or less, $10^{10}$ cells/cm$^3$ or less, or $10^9$ cells/cm$^3$ or less.

The biodegradable foam may have a resilience ratio (R) of 60% or more as calculated by the following equation.

$$R = \frac{T}{T_0} \times 100 \, (\%)$$

Here, $T_0$ is the initial thickness (mm) of the biodegradable foam, and T is the thickness (mm) measured after pressing for 30 minutes to reach a thickness of 50% of the initial thickness and then releasing the pressure. For example, the resilience ratio (R) may be 60% or more, 65% or more, 70% or more, 75% or more, 80% or more, 85% or more, 90% or more, or 95% or more, and it may be 100% or less. If the resilience ratio (R) of the foam is high, it can be used as an industrial structural material. If the resilience ratio (R) is somewhat low, it can be used as an environmentally friendly packaging material.

The process for preparing a biodegradable foam according to an embodiment of the present invention comprises preparing a foaming composition comprising a biodegradable resin; and adding a foaming agent to the foaming composition and performing foaming, wherein the biodegradable resin comprises a polyhydroxyalkanoate (PHA) resin, and the polyhydroxyalkanoate (PHA) resin comprises a 4-hydroxybutyrate (4-HB) repeat unit.

The foaming method used to prepare the biodegradable foam according to an embodiment may be physical foaming or chemical foaming.

The physical foaming may be carried out by injecting a foaming agent such as a low-boiling point solvent into a foaming composition and performing heating, softening, and foaming steps. Examples of the low-boiling point solvent include propane, butane, hexane, heptane, methylene chloride, and ethylene chloride. The physical foaming can form pores through a physical phase change or a volume change without the chemical decomposition or structural change of a foaming agent.

Specifically, the foaming may be supercritical foaming using carbon dioxide ($CO_2$) as a foaming agent. For example, the supercritical foaming may comprise adding a foaming composition, a solvent such as water, and an additive, adjusting the temperature and pressure to process conditions, and then injecting carbon dioxide to create a supercritical state. Thereafter, carbon dioxide in a supercritical state penetrates into the foaming composition. When it is released into the atmosphere from high pressure for a short period of time after a certain period of time, foaming may take place within the foaming composition. Stirring may be carried out under the process conditions during the process for mixing with the additive to increase efficiency. The supercritical foaming has the advantage of being environmentally friendly, using non-toxic and non-flammable gas, improving the characteristics of the foam, reducing the process costs, and shortening the process time.

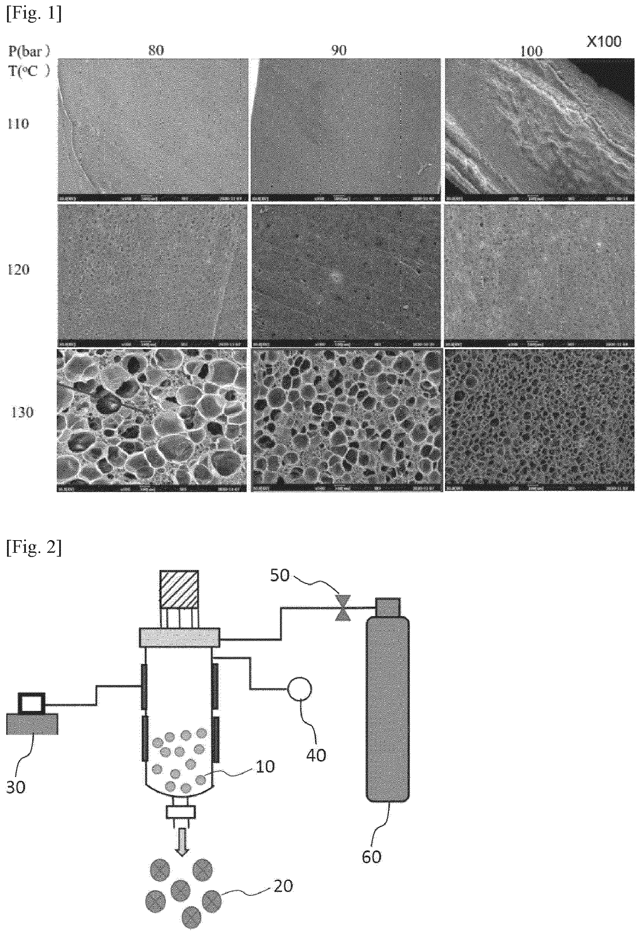

Fig. 2 shows an example of a supercritical foaming process using carbon dioxide. Referring to Fig. 2, a foaming composition (10) is charged to a reactor, supercritical conditions are formed by a temperature controller (30) and a pressure gauge (40), carbon dioxide ($CO_2$) is supplied from a tank (60) to the reactor using a pressure controller (50) so that supercritical $CO_2$ penetrates into the foaming composition, and the pressure is then rapidly released to atmospheric pressure to prepare a biodegradability foam (20).

In the supercritical foaming process, it is important to control the temperature and pressure within predetermined ranges. For example, the temperature during the supercritical foaming may be 40°C or higher, 60°C or higher, 90°C or higher, 100°C or higher, 110°C, or 120°C or higher, and 200°C or lower, 180°C or lower, 170°C or lower, 160°C or lower, 150°C or lower, 140°C or lower, or 130°C or lower. In addition, the pressure during the supercritical foaming may be 50 bar or more, 60 bar or more, 70 bar or more, 80 bar or more, or 90 bar or more, and 150 bar or less, 140 bar or less, 130 bar or less, 120 bar or less, 110 bar or less, or 100 bar or less. As a specific example, the supercritical foaming may be carried out at a temperature of 90°C to 200°C and a pressure of 50 bar to 150 bar. As a more specific example, the supercritical foaming may be carried out at a temperature of 110°C to 150°C and a pressure of 70 bar to 120 bar. Within the above preferred conditions, a foam with enhanced expansion ratio, density, and cell size may be obtained.

The expansion ratio during the supercritical foaming may be 1.1 times or more, 1.5 times or more, 2 times or more, 2.5 times or more, 3 times or more, 5 times or more, or 10 times or more, and 50 times or less, 30 times or less, 20 times or less, 18 times or less, 15 times or less, or 12 times or less. As a specific example, the foaming may be carried out at an expansion ratio of 1.1 times to 30 times. More specifically, the foaming may be carried out at an expansion ratio of 1.1 times to 18 times, 1.5 times to 12 times, or 2 times to 12 times.

The foaming composition may further comprise at least one additive. For example, the additive may be employed in an amount of 0.5 to 30% by weight based on the total solids weight of the foaming composition.

As an example, the additive may comprise at least one of chain extenders and crosslinking agents.

The chain extender may cause branching of the PHA resin or a resin blended therewith, thereby enhancing melt strength by increasing viscosity to enhance foaming characteristics. The chain extender may be, for example, an epoxy-based chain extender. Specifically, it may be a multifunctional epoxy acrylate-based oligomer, but it is not limited thereto. The chain extender may be employed in an amount of 0.01 to 20% by weight, 0.01 to 15% by weight, 0.01 to 12% by weight, 0.01 to 10% by weight, 0.01 to 8% by weight, 0.01 to 5% by weight, 0.2 to 4.5% by weight, 0.2 to 4% by weight, or 0.5 to 3% by weight, based on the total solids weight of the biodegradable resin composition.

The crosslinking agent is an additive for modifying the properties of the PHA and increasing the molecular weight of the resin. Common crosslinking agents may be used as long as the effects of the present invention are not impaired. For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate. The crosslinking agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

In addition, the additive may comprise at least one additive selected from the group consisting of antioxidants, nucleating agents, stabilizers, and compatibilizers.

The antioxidant is an additive for preventing decomposition by ozone or oxygen, preventing oxidation during storage, and preventing deterioration of the physical properties of a product. Any commonly used antioxidant may be used as the antioxidant as long as the effects of the present invention are not impaired. Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3, 9-bis[2-[3-(3-tert-butyl-4-hydroxy-5 - methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition. If the content of the antioxidant satisfies the above range, the physical properties of a product may be enhanced, and it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out since stickiness is maintained for a long period of time. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired. Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbornane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition. If the content of the nucleating agent satisfies the above range, the crystallization rate can be increased to enhance the moldability, and it is possible to further enhance the productivity and processability.

The stabilizer is an additive for protecting against oxidation and heat and preventing a color change. Any commonly used stabilizer may be used as the stabilizer as long as the effects of the present invention are not impaired. Specifically, the stabilizer may be one selected from the group consisting of trimethyl phosphate, triphenyl phosphate, trimethyl phosphine, phosphoric acid, and phosphorous acid.

The stabilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition. If the content of the stabilizer satisfies the above range, it may be more advantageous for achieving the desired effects of the present invention.

In addition, the compatibilizer is an additive for imparting compatibility by removing heterogeneity between resins. Any commonly used compatibilizer may be used as the compatibilizer as long as the effects of the present invention are not impaired. Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition. If the content of the compatibilizer satisfies the above range, the physical properties may be enhanced by increasing the compatibility between the resins used, and it may be more advantageous for achieving the desired effects of the present invention.

**Best Mode for Carrying Out the Invention**

Hereinafter, the present invention will be described in more detail with reference to the following examples. But the following Examples are intended to illustrate the present invention, and the scope of the Examples is not limited thereto only.

**A. Preparation and evaluation of a PHA resin foam and a blended resin foam**

**Example 1: Preparation of a PHA resin foam**

Step (1) Preparation of a biodegradable resin composition

The following resins and additives were compounded at the weight ratio shown in Table 1 below, mixed by a dry hand, and then mixed at 140°C at 20 rpm for 10 minutes to prepare a biodegradable resin composition.

- PHA50 resin: poly(3-HB-co-4-HB), about 50% by weight of 4-HB, aPHA, CJ CheilJedang
- PHA10 resin: poly(3-HB-co-4-HB), about 10% by weight of 4-HB, scPHA, CJ CheilJedang

The content of 4-HB in the biodegradable resin composition was measured by NMR and is shown in Table 1 below.

[Table 1]

| Example | PHA10:PHA50 (weight ratio) | 4-HB content (% by weight) |
|---|---|---|
| 1-1 | 10:0 | 9.96 |
| 1-2 | 9:1 | 13.4 |
| 1-3 | 8:2 | 18.43 |
| 1-4 | 7:3 | 23.0 |
| 1-5 | 6:4 | 26.2 |
| 1-6 | 5:5 | 30.3 |

(continued)

| Example | PHA10:PHA50 (weight ratio) | 4-HB content (% by weight) |
|---------|----------------------------|----------------------------|
| 1-7 | 4:6 | 34.5 |
| 1-8 | 0:10 | 52.3 |

The biodegradable resin compositions were each preheated at 140°C for 2 minutes, heat-pressed for 2 minutes using a compression molding machine, and then rapidly cooled in water to produce a film with a thickness of 1 T. The film was cut into a square with a size of 5 mm × 5 mm to prepare a foam sample.

Step (2) Supercritical foam molding

$CO_2$ gas was injected into the biodegradable resin composition at a temperature of 130°C and a pressure of 90 bar using an autoclave device for $CO_2$ supercritical foaming, and it was stirred for 30 minutes to diffuse the $CO_2$ gas. The $CO_2$ gas diffused in the biodegradable resin composition was rapidly lowered to atmospheric pressure to cause the resin composition to expand to obtain a foam.

**Example 2: Preparation of a PLA/PHA blended resin foam**

Step (1) Preparation of a biodegradable resin composition

The following resins and additives were compounded at the weight ratio shown in Table 2 below, mixed by a dry hand, and then mixed at 180°C at 20 rpm for 10 minutes to prepare a biodegradable resin composition.

- PLA2003D resin: polylactic acid, PLA2003D, Nature Works
- PLA4032D resin: polylactic acid, PLA4032D, Nature Works
- PHA50 resin: poly(3-HB-co-4-HB), about 50% by weight of 4-HB, aPHA, CJ CheilJedang
- ADR additive: epoxy chain extender, Joncryl™ ADR-4400

[Table 2]

| Example | PLA2003D:PHA50 (weight ratio) | ADR (phr) |
|---------|-------------------------------|-----------|
| 2-1 | 10:0 | - |
| 2-2 | 7:3 | - |
| 2-3 | 7:3 | 5 |
| 2-4 | 5:5 | - |
| 2-5 | 5:5 | 5 |
| 2-6 | 3:7 | - |
| 2-7 | 3:7 | 5 |
| 2-8 | 0:10 | - |

The biodegradable resin composition was preheated at 180°C for 2 minutes, heat-pressed for 2 minutes using a compression molding machine, and then rapidly cooled in water to produce a film with a thickness of 1 T. The film was cut into a square with a size of 5 mm × 5 mm to prepare a foam sample.

Step (2) Supercritical foam molding

$CO_2$ gas was injected into the biodegradable resin composition at a temperature of 130°C and a pressure of 90 bar using an autoclave device for $CO_2$ supercritical foaming, and it was maintained for 30 minutes to diffuse the $CO_2$ gas. The $CO_2$ gas diffused in the biodegradable resin composition was rapidly lowered to atmospheric pressure to cause the resin composition to expand to obtain a foam.

**Example 3: Preparation of a PP/PHA blended resin foam**

Step (1) Preparation of a biodegradable resin composition

The following resins and additives were compounded at the weight ratio shown in Table 3 below, mixed by a dry hand, and then mixed at 140°C at 20 rpm for 10 minutes to prepare a biodegradable resin composition.

- RPP resin: random polypropylene, RP5062H, manufacturer: PolyMirae
- RPP-MAH resin: maleic anhydride grafted random polypropylene, HD, manufacturer: Hyundai EP
- PHA50 resin: poly(3-HB-co-4-HB), about 50% by weight of 4-HB, aPHA, CJ CheilJedang
- PHA10 resin: poly(3-HB-co-4-HB), about 10% by weight of 4-HB, scPHA, CJ CheilJedang
- ADR additive: epoxy chain extender, Joncryl™ ADR-4370, BASF

[Table 3]

| Example | Blended resin (part by weight) | | | | Additive (phr) |
|---|---|---|---|---|---|
| | RPP | RPP-MAH | PHA50 | PHA10 | ADR |
| 3-1 | 100 | - | - | - | - |
| 3-2 | 100 | - | - | - | 5 |
| 3 -3 | 70 | - | 30 | - | - |
| 3-4 | 70 | - | 30 | - | 5 |
| 3-5 | 70 | - | - | 30 | - |
| 3-6 | 70 | - | - | 30 | 5 |
| 3-7 | - | 100 | - | - | - |
| 3-8 | - | 100 | - | - | 5 |
| 3-9 | - | 70 | 30 | - | - |
| 3-10 | - | 70 | 30 | - | 5 |
| 3-11 | - | 70 | - | 30 | - |
| 3-12 | - | 70 | - | 30 | 5 |
| 3-13 | - | - | - | 100 | - |

The biodegradable resin composition was preheated at 180°C for 2 minutes, heat-pressed for 2 minutes using a compression molding machine, and then rapidly cooled in water to produce a film with a thickness of 1 T. The film was cut into a square with a size of 5 mm $\times$ 5 mm to prepare a foam sample.

Step (2) Supercritical foam molding

Water and $CO_2$ gas were injected into the biodegradable resin composition at a temperature of 140°C and a pressure of 80 bar using an autoclave device for $CO_2$ supercritical foaming, and it was maintained for 30 minutes to diffuse the $CO_2$ gas. The $CO_2$ gas diffused in the biodegradable resin composition was rapidly lowered to atmospheric pressure to cause the resin composition to expand to obtain a foam.

**Test Example 1: Complex viscosity and tan $\delta$ of the biodegradable resin composition**

The biodegradable resin compositions prepared above were each measured for complex viscosity using the following test equipment, procedures, and conditions. In addition, the storage modulus (E') and loss modulus (E") of the biodegradable resin composition were measured to calculate tan $\delta$ (= E"/E).

- Test equipment: rotational rheometer
- Test procedures: The biodegradable resin composition was preheated at 140°C (Example 1) or 180°C (Example 2) for 2 minutes, heat-pressed for 2 minutes using a compression molding machine, and then rapidly cooled in water to produce a film with a thickness of 1 T. A circular-shaped sample with a diameter of 25 mm was then prepared.

- Test conditions: Complex viscosity and tan $\delta$ measurement temperature: 140°C (Example 1) or 180°C (Example 2); angular frequency 0.1-600 rad/s; %strain 0.1 at 140°C, 3 at 160°C, and 5 at 180°C

The results are shown in the tables below.

[Table 4]

| Example | Complex viscosity (Pa·s) (at 140°C, 0.1 rad/s) | Example | Complex viscosity (Pa·s) (at 180°C, 0.1 rad/s) |
|---------|---------|---------|---------|
| 1-1 | 945,000 | 2-1 | 3,745 |
| 1-2 | 731,200 | 2-2 | 1,808 |
| 1-3 | 487,900 | 2-3 | 13,180 |
| 1-4 | 556,000 | 2-4 | 1,331 |
| 1-5 | 259,600 | 2-5 | 5,365 |
| 1-6 | 241,200 | 2-6 | 848.1 |
| 1-7 | 164,200 | 2-7 | 1,946 |
| 1-8 | 48_340 | 2-8 | 7,249 |

[Table 5]

| Example | tan $\delta$ (at 140°C, 0.1 rad/s) | Example | tan $\delta$ (at 180°C, 0.1 rad/s) |
|---------|---------|---------|---------|
| 1-1 | 0.8184 | 2-1 | 35.38 |
| 1-2 | 0.4346 | 2-2 | 3.723 |
| 1-3 | 1.214 | 2-3 | 2.341 |
| 1-4 | 0.7061 | 2-4 | 4.08 |
| 1-5 | 0.8928 | 2-5 | 4.724 |
| 1-6 | 1.363 | 2-6 | 4.65 |
| 1-7 | 1.339 | 2-7 | 9.719 |
| 1-8 | 6.662 | 2-8 | 11.19 |

As a result of the tests, it was confirmed that viscosity and viscoelasticity could be adjusted by adjusting the mixing ratio of the resins.

**Test Example 2: Thermal properties of the biodegradable resin composition**

The biodegradable resin compositions prepared above were each measured for glass transition temperature (Tg) and crystallization temperature (Tc) using the following test equipment, procedures, and conditions.

- Test equipment: differential scanning calorimetry (DSC)
- Test procedures: a sample of 5 to 10 mg was placed in a DSC aluminum pan.
- Test conditions: heating and cooling from 30°C to 250°C, then to -50°C, finally to 250°C at a rate of 20°C per minute

The results are shown in the tables below.

[Table 6]

| Example | Glass transition temperature (°C) | Example | Crystallization temperature (°C) |
|---------|---------|---------|---------|
| 1-1 | 1.56 | 1-1 | 85.36 |

(continued)

| Example | Glass transition temperature (°C) | Example | Crystallization temperature (°C) |
|---|---|---|---|
| 1-2 | -1.31 | 1-2 | 85.66 |
| 1-3 | -3.05 | 1-3 | 81.45 |
| 1-4 | -5.28 | 1-4 | 84.09 |
| 1-5 | -7.70 | 1-5 | 92.14 |
| 1-6 | -9.84 | 1-6 | 93.93 |
| 1-7 | -12.81 | 1-7 | 95.06 |
| 1-8 | -20.70 | 1-8 | - |

As a result of the tests, it was confirmed that thermal properties and crystallization behaviors could be adjusted by adjusting the mixing ratio of the resins.

**Test Example 3: Tensile test**

The biodegradable resin compositions prepared above were each subjected to a tensile test using the following test equipment, procedures, and conditions.

- Test equipment: UTM (universal testing machine)
- Test procedures: The film with a thickness of 1 T was cut into a rectangular shape of 1 cm in width and 5 cm in length, 1 cm of each end of which was fixed to the equipment, and the remaining 3 cm thereof was stretched.
- Test conditions: The sample was stretched at a speed of 50 mm/minute until the stretched surface was fractured.

The results are shown in the tables below.

[Table 7]

| Example | Tensile strength (MPa) | Example | Elongation at break (%) |
|---|---|---|---|
| 3-1 | 26.96638 | 3-1 | 1,145.562 |
| 3-5 | 9.37595 | 3-5 | 281.6805 |
| 3-6 | 10.3775 | 3-6 | 12.856 |
| 3-13 | 29.88548 | 3-13 | 11.94718 |

As a result of the tests, tensile strength and elongation at break could be adjusted by adjusting the mixing ratio of the resins.

**Test Example 4: Evaluation of the cell shape of the foam**

Each foam was prepared according to the procedure of Example 1 while a PHA10 resin (poly(3-HB-co-4-HB), about 10% by weight of 4-HB, scPHA, CJ CheilJedang) alone was used as a biodegradable resin, and the supercritical foaming temperature was changed to 110°C, 120°C, or 130°C and the pressure to 80 bar, 90 bar, or 100 bar.
The cell shape of the foam thus prepared was observed using the following test equipment.

- Test equipment: SEM (scanning electron microscope)

The results are shown in Fig. 1. As shown in Fig. 1, when the foaming temperature during the production of the PHA 10 resin foam was 130°C and the pressure was 90 bar, it was confirmed that the shape of cells in the foam was uniform, and the density of the foam cells was excellent.

**Test Example 5: Evaluation of the foam - density, expansion ratio, and cell diameter**

The foams prepared above were each evaluated using test equipment under the following procedures.

- Test equipment: SEM (scanning electron microscope), electronic densimeter (SD-200L) of Hitachi
- Test procedures: A thin plating film was formed on the cross-section of the foam, and the cell diameter and number of cells per unit area were measured using SEM. The pellet density ($p_p$) before foaming and foam density ($p_f$) were measured using a densimeter.

The results are shown in the tables below.

[Table 8]

| Example | Foam density (g/cm$^3$) | Example | Foam density (g/cm$^3$) |
|---------|------------------------|---------|------------------------|
| 1-1 | 0.224333 | 2-1 | 0.1303 |
| 1-2 | 0.161233 | 2-2 | 0.237633 |
| 1-3 | 0.2472167 | 2-3 | 0.096433 |
| 1-4 | 0.1182 | 2-4 | 0.8352 |
| 1-5 | 0.441933 | 2-5 | 0.865633 |
| 1-6 | 0.563867 | | |
| 1-7 | 0.761733 | | |

[Table 9]

| Example | Foam expansion ratio (fold) | Example | Foam expansion ratio (fold) |
|---------|----------------------------|---------|----------------------------|
| 1-1 | 5.816267 | 2-1 | 9.997 |
| 1-2 | 8.121867 | 2-2 | 5.499833 |
| 1-3 | 5.369167 | 2-3 | 13.68443 |
| 1-4 | 11.0125 | 2-4 | 1.5657 |
| 1-5 | 3.014733 | 2-5 | 1.5019 |
| 1-6 | 2.382633 | | |
| 1-7 | 1.718533 | | |

[Table 10]

| Example | Average diameter of cells (μm) | Example | Average diameter of cells (μm) |
|---------|-------------------------------|---------|-------------------------------|
| 1-1 | 52.85716 | 3-1 | 50.125 |
| 1-2 | 50.71428 | 3-2 | 40.75 |
| 1-3 | 50.5357 | 3-3 | - |
| 1-4 | 69.42858 | 3-4 | 226.725 |
| 1-5 | 4.64 | 3-5 | 121.375 |
| 1-6 | 3.8 | 3-6 | 90.225 |
| 1-7 | 6.875 | 3-7 | 55.25 |
| | | 3-8 | 42 |
| | | 3-9 | - |
| | | 3-10 | 204.45 |
| | | 3-11 | - |
| | | 3-12 | 217.325 |

As a result of the tests, density, expansion ratio, and cell diameter could be adjusted by adjusting the mixing ratio of the resins. In addition, foaming performance could be enhanced by adding a chain extender.

**B. Preparation and evaluation of a PHA resin foam**

The characteristics of supercritical carbon dioxide foaming of poly(3-HB-co-4-HB), a biodegradable polymer, were confirmed. The changes in density and expansion ratio of the foam prepared were confirmed while the changes in such foaming conditions as pressure and temperature with respect to 4-HB content were examined.

**(1) Raw materials and characteristics**

The PHA copolymer resins used in the tests were purchased from CJ CheilJedang. A multifunctional styrene-acrylic oligomer (Joncryl ADR 4370) was used as a chain extender to control the viscoelasticity of the PHA copolymer resin in the supercritical $CO_2$ foaming process.

- PHA10 resin: poly(3-HB-co-4-HB), about 10% by weight of 4-HB, scPHA, CJ CheilJedang
- PHA16 resin: poly(3-HB-co-4-HB), about 16% by weight of 4-HB, scPHA, CJ CheilJedang
- PHA30 resin: poly(3-HB-co-4-HB), about 30% by weight of 4-HB, aPHA, CJ CheilJedang
- PHA50 resin: poly(3-HB-co-4-HB), about 50% by weight of 4-HB, aPHA, CJ CheilJedang
- ADR additive: epoxy chain extender, Joncryl™ ADR-4370, BASF

The copolymer with a 4-HB content of 10% or 16% was confirmed to be crystalline, and the copolymer with a 4-HB content of 30% or 53.7% was confirmed to be amorphous.

The 4-HB content, molecular weight, heat of fusion, and the like of the PHA copolymer resins used in the tests are shown in Table 11.

[Table 11]

| Foaming composition | 4-HB content (% by weight) | Mw ($\times$ 1,000) | $\Delta$Hm (J/g) | Tm1 (°C) | Tm2 (°C) | Tc (°C) |
|---|---|---|---|---|---|---|
| PHA10 | 10 | 600 | 23.97 | 122.96 | 145.92 | 75.82 |
| PHA10 + ADR (5 phr) | 10 | 600 | 9.65 | 113.59 | 141.96 | 72.53 |
| PHA16 | 16 | 1000 | 3.99 | 115.82 | 155.59 | 59.67 |
| PHA16 + ADR (5 phr) | 16 | 1000 | 2.54 | 113.55 | 154.96 | 56.84 |
| PHA30 | 30 | 687 | - | - | - | - |
| PHA50 | 53.7 | 901 | - | - | - | - |

As can be seen from the above table, melt properties and crystal properties changed depending on the content of 4-HB in the PHA copolymer resin and the addition of a chain extender (ADR).

**(2) Test procedures**

PHA copolymer resins with different 4-HB contents were each melted at 140°C and 20 rpm for 10 minutes using an internal mixer (Haake, Reomix600, Germany). As a result, samples with identical thermal histories were prepared with minimal thermal degradation. When a chain extender was added at a concentration of 5 phr, melt processing was performed at 180°C, which is a temperature at which the chain extender can react.

The obtained composition sample was heated at 140°C for 2 minutes and then compression molded for 2 minutes with the pressure raised to 8 MPa using a compression molding machine (QMESYS, QM900, Korea). Thereafter, it was cooled with water to obtain a sheet of 150 mm $\times$ 150 mm with a thickness of 1 T. The sheet was cut into pieces of 5 mm $\times$ 5 mm for charging as beads into a foaming reactor.

The tan $\delta$ of the PHA copolymer resin was measured for a sheet of 1 mm $\times$ 2.5 mm at 30-140°C and an oscillation frequency of 1 MHz using a dynamic mechanical thermal analyzer (TA, DMA Q800/2980, USA).

10 g of a foaming composition (beads) was charged to a lab-scale autoclave as shown in Fig. 2, supercritical $CO_2$ was diffused into the foaming composition for 60 minutes under $CO_2$ supercritical conditions of 50-135°C and 70-100 bar, and the pressure was rapidly released to atmospheric pressure to prepare PHA copolymer resin foam beads.

The structure of the PHA copolymer resin foam was evaluated by SEM photographs taken with a scanning electron microscope (SEM S-5200, Hitachi). In addition, the density of the composition before foaming ($p_p$) and the density of the foam after foaming ($p_f$) were measured, and the expansion ratio ($\Phi$) was calculated according to the following Equation (1).

Cell density ($N_f$) was calculated by substituting the number of cells (n) per an area (A) of 1 cm² in the foam according to the following Equation (2).

The thickness ($T_0$) of the foam was first measured. It was compressed for 30 minutes to reach 50% of the thickness, and the pressure was released to measure the thickness (T). Resilience ratio (R) was calculated in percentage according to the following Equation (3).

$$\Phi = \frac{\rho_p}{\rho_f} \quad \ldots(1) \qquad N_f = \left(\frac{n}{A}\right)^{\frac{3}{2}} X \; \Phi \quad \ldots(2) \qquad R = \frac{T}{T_0} \times 100 \; (\%) \quad \ldots(3)$$

**(3) Test results**

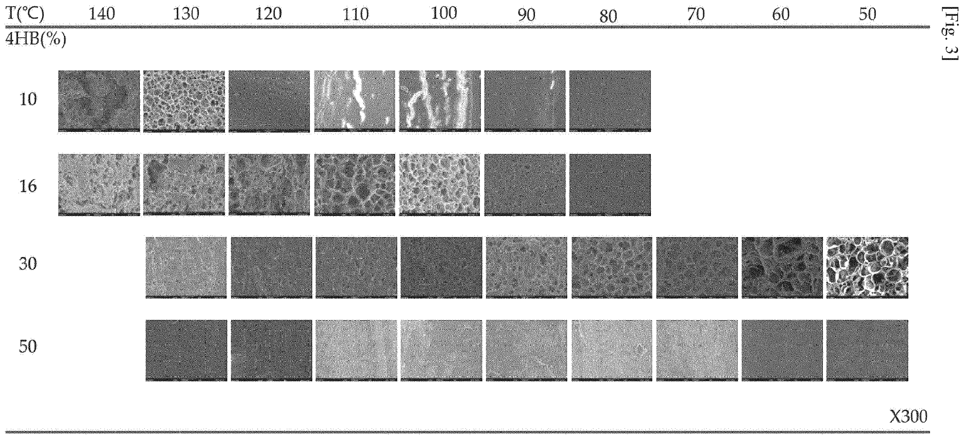

Fig. 3 shows SEM images of foams prepared from PHA copolymer resins with various 4-HB contents with respect to temperature (foaming pressure of 90 bar). It is understood from Fig. 3 that the temperature at which foam cells develop varies depending on the content of 4-HB.

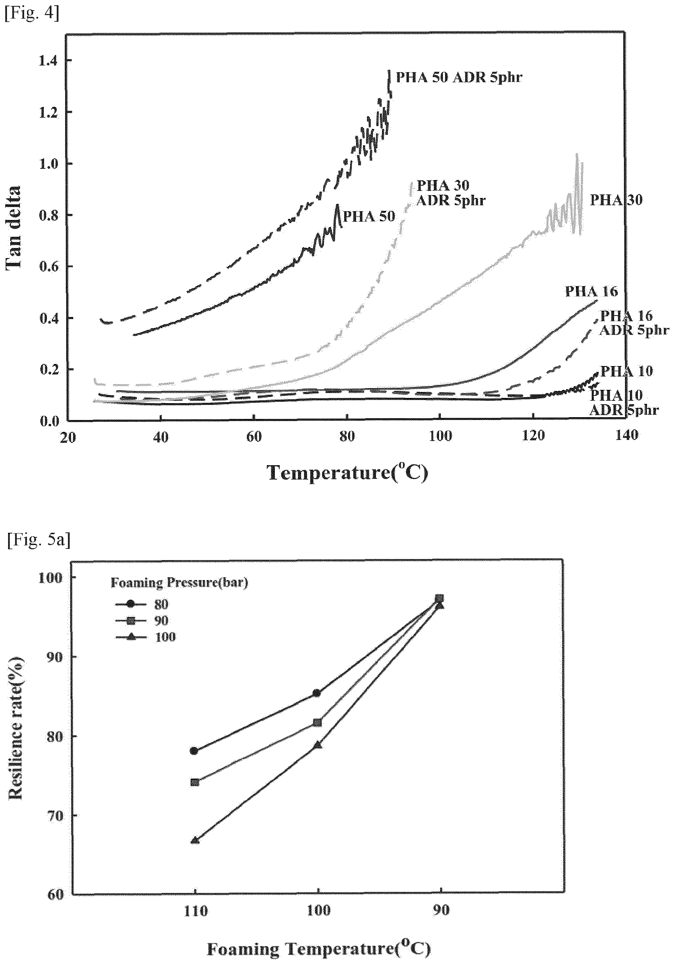

Fig. 4 shows dynamic mechanical thermal analysis (DMA) thermograms of various PHA copolymer resins with or without the addition of a chain extender (ADR). It is understood from Fig. 4 that the tan $\delta$ value of a PHA copolymer resin changes with temperature and that the tan $\delta$ value increases as the content of 4-HB increases. In addition, tan $\delta$ could be adjusted by adding a chain extender (ADR).

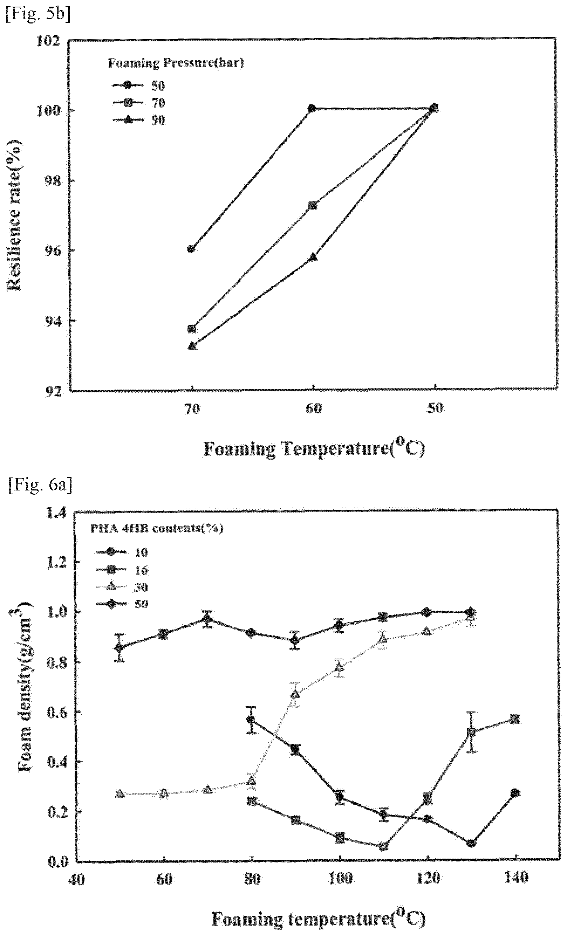

Figs. 5a and 5b show the resilience characteristics of foams prepared from PHA10 and PHA30, respectively. It is understood from Figs. 5a and 5b that the resilience ratio of the PHA30 foam, which is amorphous due to a high content of 4-HB, is higher than that of crystalline PHA10 foam.

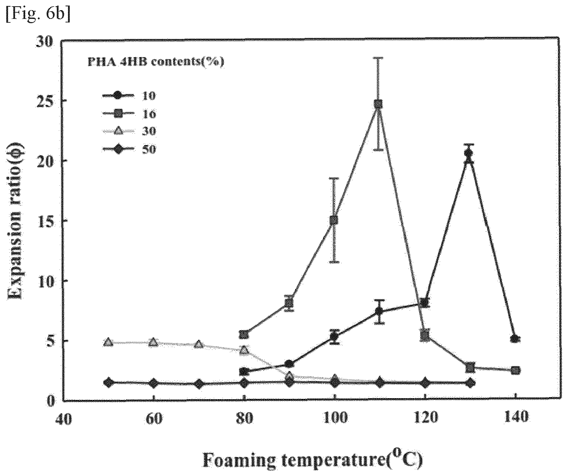

Figs. 6a and 6b each show the foam density and expansion ratio of PHA copolymer resin foam beads with respect to foaming temperature (foaming pressure of 90 bar). It is understood from Figs. 6a and 6b that the density and expansion of the PHA copolymer resin foam change depending on the foaming temperature, and the temperature for the lowest density and highest expansion ratio differs depending on the 4-HB content.

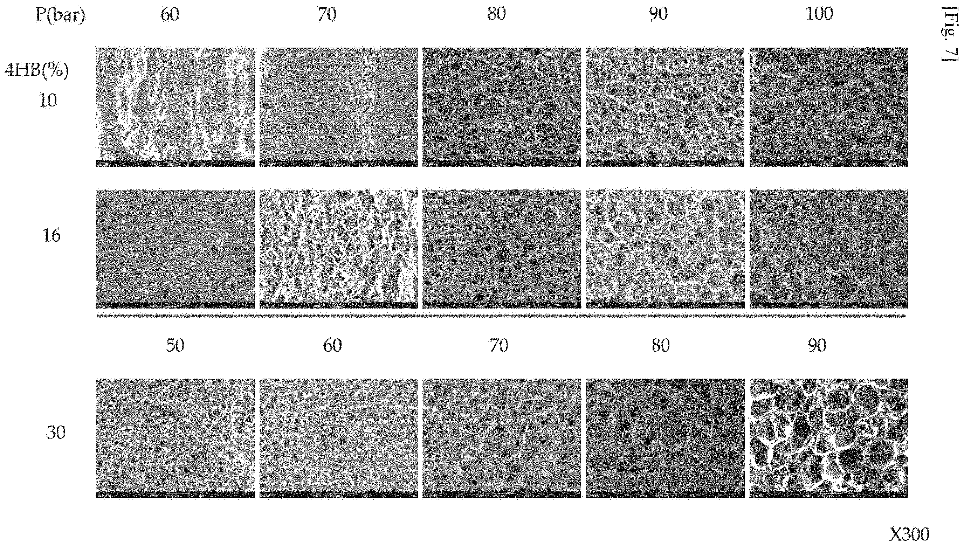

Fig. 7 shows SEM images of PHA copolymer resin foams obtained under various foaming pressure conditions (foaming temperature of 130°C for PHA10, 100°C for PHA16, and 50°C for PHA30). It is understood from Fig. 7 that the cell diameter of the foam tends to increase as the foaming pressure increases, and the pressure for the maximum cell diameter varies depending on the content of 4-HB.

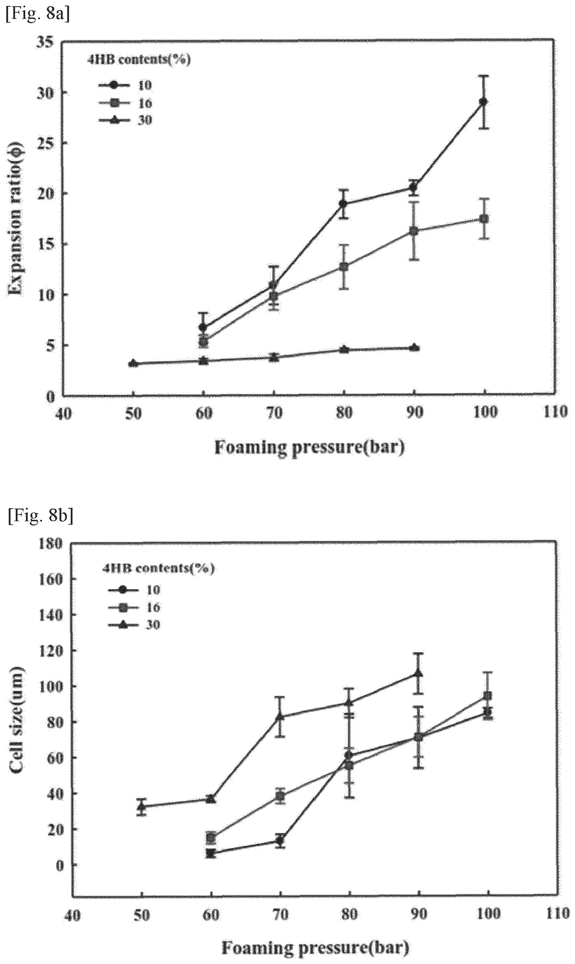

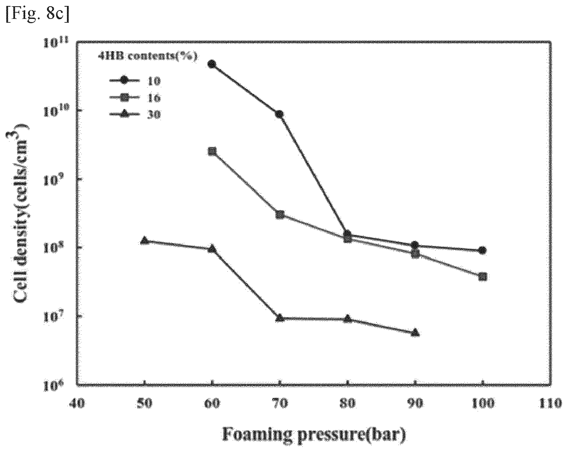

Figs. 8a, 8b, and 8c each show the expansion ratio, cell diameter, and cell density of PHA copolymer resin foams with respect to foaming pressure. In Figs. 8a, 8b, and 8c, the expansion ratio and cell diameter tend to increase and the density decreases as the foaming pressure increases.

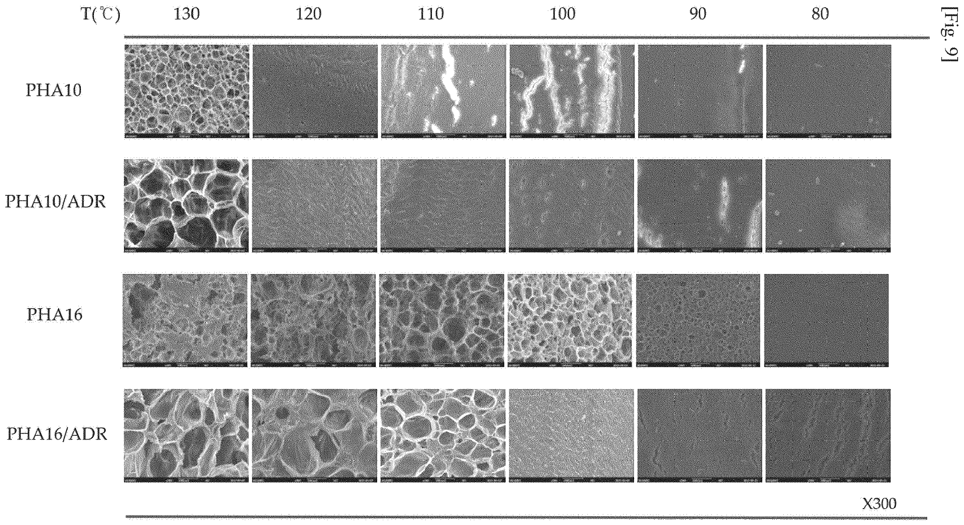

Fig. 9 shows SEM images of PHA copolymer resin foams with or without the addition of a chain extender (ADR). It is understood from Fig. 9 that cell diameter and foaming temperature change as a chain extender (ADR) is added to the PHA copolymer resin.

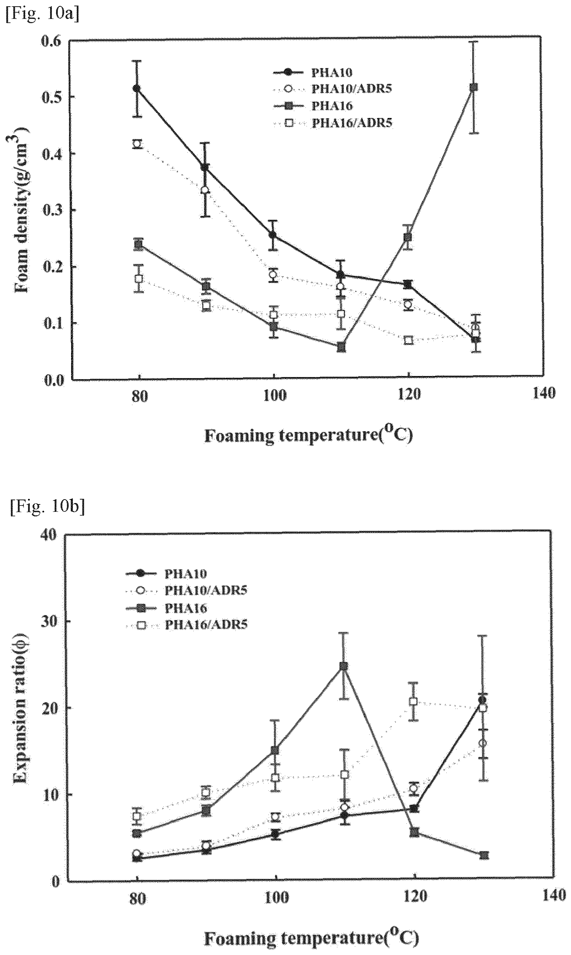

Figs. 10a and 10b each show the density and expansion ratio of PHA copolymer resin foams with or without the addition of a chain extender. In Figs. 10a and 10b, foam density and expansion ratio vary depending on whether or not a chain extender is added and also vary depending on the content of 4-HB.

The above test results indicate that an increase in the content of 4-HB in the PHA copolymer resin tends to reduce the melt strength that must be maintained for cell growth of a foam, and it is possible to maintain an appropriate melt strength for foaming by adjusting the conditions such as lowering the foaming temperature as the content of 4-HB increases. In addition, the crystalline PHA copolymer resin with a low content of 4-HB was able to obtain a foam with a low foam density and a high expansion ratio as compared with the amorphous PHA copolymer resin. In addition, the addition of a chain extender could further increase the expansion ratio of the PHA copolymer resin foam.

**Claims**

1. A foaming composition, which comprises a biodegradable resin, wherein the biodegradable resin comprises a polyhydroxyalkanoate (PHA) resin, and the polyhydroxyalkanoate (PHA) resin comprises a 4-hydroxybutyrate (4-HB) repeat unit.

2. The foaming composition according to claim 1, wherein the polyhydroxyalkanoate (PHA) resin further comprises at least one repeat unit selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

3. The foaming composition according to claim 1, wherein the polyhydroxyalkanoate (PHA) resin is a polyhydroxyalkanoate (PHA) copolymer resin comprising a 4-hydroxybutyrate (4-HB) repeat unit in an amount of 0.1% by weight to 60% by weight.

4. The foaming composition according to claim 1, wherein the biodegradable resin further comprises at least one of a polylactic acid (PLA) resin and a polypropylene (PP) resin.

5. The foaming composition according to claim 4, wherein the biodegradable resin comprises the polyhydroxyalkanoate (PHA) resin and the polylactic acid (PLA) resin in a weight ratio of 10:90 to 30:70.

6. The foaming composition according to claim 4, wherein the biodegradable resin comprises the polyhydroxyalkanoate (PHA) resin and the polypropylene (PP) resin in a weight ratio of 10:90 to 30:70.

7. The foaming composition according to claim 1, which has a tan $\delta$ of 2 to 40, when calculated by the following equation at a temperature of 180°C and a frequency of 0.1 rad/s:

$$\tan \delta = (E'' / E')$$

wherein E" is the loss modulus, and E' is the storage modulus.

8. The foaming composition according to claim 1, which has a glass transition temperature (Tg) of -25°C to 5°C and a crystallization temperature (Tc) of 55°C to 100°C.

9. The foaming composition according to claim 1, which has a tensile strength of 5 MPa to 50 MPa.

10. The foaming composition according to claim 1, wherein the foaming composition further comprises at least one additive, and the additive comprises at least one of chain extenders and crosslinking agents.

11. A biodegradable foam, which comprises the foaming composition of any one of claims 1 to 10.

12. The biodegradable foam according to claim 11, wherein the biodegradable foam has a density of 0.01 $g/cm^3$ to 1.0 $g/cm^3$.

13. The biodegradable foam according to claim 11, wherein the average diameter of cells contained in the biodegradable foam is 3 $\mu$m to 250 $\mu$m.

14. The biodegradable foam according to claim 11, wherein the biodegradable foam has a resilience ratio (R) of 60% or more as calculated by the following equation:

$$R = \frac{T}{T_0} \times 100 \ (\%)$$

wherein $T_0$ is the initial thickness (mm) of the biodegradable foam, and T is the thickness (mm) measured after pressing for 30 minutes to reach a thickness of 50% of the initial thickness and then releasing the pressure.

15. A process for preparing a biodegradable foam, which comprises preparing a foaming composition comprising a biodegradable resin; and adding a foaming agent to the foaming composition and performing foaming, wherein the biodegradable resin comprises a polyhydroxyalkanoate (PHA) resin, and the polyhydroxyalkanoate (PHA) resin comprises a 4-hydroxybutyrate (4-HB) repeat unit.

16. The process for preparing a biodegradable foam according to claim 15, wherein the foaming is supercritical foaming using carbon dioxide ($CO_2$) as a foaming agent.

17. The process for preparing a biodegradable foam according to claim 16, wherein the supercritical foaming is carried out at a temperature of 90°C to 200°C and a pressure of 50 bar to 150 bar.

18. The process for preparing a biodegradable foam according to claim 15, wherein the foaming is carried out at an expansion ratio of 1.1 times to 30 times.

[Fig. 1]

[Fig. 2]

[Fig. 3]

[Fig. 4]

[Fig. 5a]

[Fig. 5b]

[Fig. 6a]

[Fig. 6b]

[Fig. 7]

[Fig. 8a]

[Fig. 8b]

[Fig. 8c]

[Fig. 9]

[Fig. 10a]

[Fig. 10b]

## INTERNATIONAL SEARCH REPORT

| | International application No. |
|---|---|
| | **PCT/KR2022/013050** |

| A. | CLASSIFICATION OF SUBJECT MATTER |
|---|---|

**C08L 67/04**(2006.01)i; **C08L 23/12**(2006.01)i; **C08J 9/00**(2006.01)i

According to International Patent Classification (IPC) or to both national classification and IPC

| B. | FIELDS SEARCHED |
|---|---|

Minimum documentation searched (classification system followed by classification symbols)

C08L 67/04(2006.01); C08J 5/18(2006.01); C08J 9/00(2006.01); C08J 9/06(2006.01); C08J 9/08(2006.01); C08J 9/35(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 생분해성(biodegradable), 폴리하이드록시알카노에이트(polyhydroxyalkanoate, PHA), 4-하이드록시부티레이트(4-hydroxybutyrate), 발포(foam)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-1399802 B1 (TIANJIN GREENBIO MATERIAL CO., LTD. et al.) 27 May 2014 (2014-05-27) See abstract; paragraphs [0037], [0042], [0046]-[0053] and [0080]-[0086]; claim 1; and example 1. | 1-5,7,9,11-18 |
| Y | | 6,8,10 |
| Y | US 2014-0107240 A1 (DONNELLY, Z.) 17 April 2014 (2014-04-17) See abstract; paragraph [0029]; and claim 1. | 6 |
| Y | US 2015-0147929 A1 (METABOLIX, INC.) 28 May 2015 (2015-05-28) See abstract; paragraphs [0030] and [0031]; and claim 4. | 8,10 |
| X | US 2011-0306693 A1 (BOSNYAK, C. P. et al.) 15 December 2011 (2011-12-15) See abstract; and claims 127, 135-140 and 149-153. | 1-3,11,15,16 |
| A | KR 10-2015-0119577 A (LG HAUSYS, LTD.) 26 October 2015 (2015-10-26) See entire document. | 1-18 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2022** | **30 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
|---|---|
| | **PCT/KR2022/013050** |

**C.    DOCUMENTS CONSIDERED TO BE RELEVANT**

| Category* | Citation of document, with indication, where appropriate, of the relevant passages | Relevant to claim No. |
|---|---|---|
| A | US 2018-0334564 A1 (CJ CHEILJEDANG CORPORATION) 22 November 2018 (2018-11-22)<br>  See entire document. | 1-18 |

**INTERNATIONAL SEARCH REPORT**
Information on patent family members

International application No.

**PCT/KR2022/013050**

| Patent document cited in search report | | | Publication date (day/month/year) | Patent family member(s) | | | Publication date (day/month/year) |
|---|---|---|---|---|---|---|---|
| KR | 10-1399802 | B1 | 27 May 2014 | CN | 1923890 | A | 07 March 2007 |
| | | | | EP | 2060605 | A1 | 20 May 2009 |
| | | | | JP | 2010-501682 | A | 21 January 2010 |
| | | | | JP | 5103686 | B2 | 19 December 2012 |
| | | | | US | 2009-0239963 | A1 | 24 September 2009 |
| | | | | US | 8586643 | B2 | 19 November 2013 |
| | | | | WO | 2008-028344 | A1 | 13 March 2008 |
| US | 2014-0107240 | A1 | 17 April 2014 | EP | 2718001 | A1 | 16 April 2014 |
| | | | | EP | 2718001 | B1 | 03 July 2019 |
| | | | | US | 9505896 | B2 | 29 November 2016 |
| | | | | WO | 2012-170215 | A1 | 13 December 2012 |
| US | 2015-0147929 | A1 | 28 May 2015 | CN | 104379671 | A | 25 February 2015 |
| | | | | CN | 109265943 | A | 25 January 2019 |
| | | | | CN | 109265943 | B | 10 August 2021 |
| | | | | EP | 2855584 | A1 | 08 April 2015 |
| | | | | EP | 3424990 | A1 | 09 January 2019 |
| | | | | EP | 3424990 | B1 | 05 May 2021 |
| | | | | ES | 2879250 | T3 | 22 November 2021 |
| | | | | US | 10113060 | B2 | 30 October 2018 |
| | | | | US | 2015-0132512 | A1 | 14 May 2015 |
| | | | | US | 9353258 | B2 | 31 May 2016 |
| | | | | WO | 2013-184822 | A1 | 12 December 2013 |
| | | | | WO | 2013-184836 | A1 | 12 December 2013 |
| US | 2011-0306693 | A1 | 15 December 2011 | AR | 071687 | A1 | 07 July 2010 |
| | | | | AR | 072203 | A1 | 11 August 2010 |
| | | | | AR | 072204 | A1 | 11 August 2010 |
| | | | | AR | 072205 | A1 | 11 August 2010 |
| | | | | AU | 2009-322983 | A1 | 30 June 2011 |
| | | | | AU | 2010-234590 | A1 | 03 November 2011 |
| | | | | BR | PI0910459 | A2 | 24 September 2019 |
| | | | | BR | PI0912578 | A2 | 13 October 2015 |
| | | | | BR | PI0915095 | A2 | 27 October 2015 |
| | | | | BR | PI0915095 | B1 | 24 April 2019 |
| | | | | BR | PI0915095 | B8 | 01 October 2019 |
| | | | | BR | PI1016046 | A2 | 10 May 2016 |
| | | | | CA | 2720583 | A1 | 22 October 2009 |
| | | | | CA | 2722940 | A1 | 12 November 2009 |
| | | | | CA | 2727016 | A1 | 21 January 2010 |
| | | | | CA | 2745223 | A1 | 10 June 2010 |
| | | | | CA | 2748035 | A1 | 01 July 2010 |
| | | | | CA | 2757617 | A1 | 14 October 2010 |
| | | | | CN | 102027052 | A | 20 April 2011 |
| | | | | CN | 102056985 | A | 11 May 2011 |
| | | | | CN | 102056985 | B | 19 February 2014 |
| | | | | CN | 102112519 | A | 29 June 2011 |
| | | | | CN | 102112519 | B | 13 August 2014 |
| | | | | CN | 102421819 | A | 18 April 2012 |
| | | | | EP | 2285877 | A1 | 23 February 2011 |
| | | | | EP | 2285901 | A1 | 23 February 2011 |
| | | | | EP | 2285901 | B1 | 22 July 2020 |

Form PCT/ISA/210 (patent family annex) (July 2022)

**INTERNATIONAL SEARCH REPORT**
Information on patent family members

International application No.

**PCT/KR2022/013050**

| Patent document cited in search report | | | Publication date (day/month/year) | Patent family member(s) | | | Publication date (day/month/year) |
|---|---|---|---|---|---|---|---|
| | | | | EP | 2291429 | A2 | 09 March 2011 |
| | | | | EP | 2291429 | B1 | 05 June 2013 |
| | | | | EP | 2291430 | A1 | 09 March 2011 |
| | | | | EP | 2370508 | A1 | 05 October 2011 |
| | | | | EP | 2379618 | A1 | 26 October 2011 |
| | | | | EP | 2417179 | A1 | 15 February 2012 |
| | | | | EP | 2417179 | B1 | 02 July 2014 |
| | | | | ES | 2426774 | T3 | 25 October 2013 |
| | | | | ES | 2503552 | T3 | 07 October 2014 |
| | | | | ES | 2817544 | T3 | 07 April 2021 |
| | | | | KR | 10-2011-0008234 | A | 26 January 2011 |
| | | | | KR | 10-2011-0008312 | A | 26 January 2011 |
| | | | | KR | 10-2011-0038642 | A | 14 April 2011 |
| | | | | TW | 201012846 | A | 01 April 2010 |
| | | | | TW | 201022328 | A | 16 June 2010 |
| | | | | TW | 201022341 | A | 16 June 2010 |
| | | | | TW | 201042103 | A | 01 December 2010 |
| | | | | US | 2011-0124779 | A1 | 26 May 2011 |
| | | | | US | 2011-0189414 | A1 | 04 August 2011 |
| | | | | US | 2011-0251349 | A1 | 13 October 2011 |
| | | | | US | 2011-0256398 | A1 | 20 October 2011 |
| | | | | US | 2011-0293865 | A1 | 01 December 2011 |
| | | | | US | 2012-0041109 | A1 | 16 February 2012 |
| | | | | US | 8487023 | B2 | 16 July 2013 |
| | | | | US | 8822584 | B2 | 02 September 2014 |
| | | | | US | 9034989 | B2 | 19 May 2015 |
| | | | | WO | 2009-129499 | A1 | 22 October 2009 |
| | | | | WO | 2009-137058 | A1 | 12 November 2009 |
| | | | | WO | 2010-008445 | A2 | 21 January 2010 |
| | | | | WO | 2010-008445 | A3 | 11 March 2010 |
| | | | | WO | 2010-008447 | A1 | 21 January 2010 |
| | | | | WO | 2010-065053 | A1 | 10 June 2010 |
| | | | | WO | 2010-075530 | A1 | 01 July 2010 |
| | | | | WO | 2010-075530 | A8 | 16 September 2010 |
| | | | | WO | 2010-118041 | A1 | 14 October 2010 |
| KR | 10-2015-0119577 | A | 26 October 2015 | KR | 10-1711252 | B1 | 02 March 2017 |
| US | 2018-0334564 | A1 | 22 November 2018 | CN | 108463506 | A | 28 August 2018 |
| | | | | EP | 3377579 | A1 | 26 September 2018 |
| | | | | US | 11091632 | B2 | 17 August 2021 |
| | | | | WO | 2017-087658 | A1 | 26 May 2017 |

Form PCT/ISA/210 (patent family annex) (July 2022)

## REFERENCES CITED IN THE DESCRIPTION

**Patent documents cited in the description**

- KR 2056838